# EUROPÄISCHE PATENTANMELDUNG

(11) **EP 1 120 529 A2**
(43) Veröffentlichungstag der Anmeldung: **01.08.2001**
(21) Anmeldenummer: 01101858.7
(22) Anmeldetag: 26.01.2001
(51) Int. Cl.: E05G 1/00, E05G 1/12, B60P 3/03

(54) **Aufbewahrungs-und/oder Beförderungseinheit für Wertgegenstände**

(30) Priorität: 26.01.2000 DE 10003386
(71) Anmelder: Rheinmetall Landsysteme GmbH, 34127 Kassel (DE)
(72) Erfinder: Falkenreck, Andreas, Dipl.-Ing., 34246 Vellmar (DE); Prummenbaum, Eric, Dipl.-Ing., 34246 Vellmar (DE)
(74) Vertreter: Wolf, Jens, Dipl.-Phys.

(57) **Zusammenfassung**

Eine Aufbewahrungs- und/oder Beförderungseinheit für Wertgegenstände, mit einem, die Wertgegenstände nach außen abgrenzenden Zugriffsschutz soll dahingehend weiterentwickelt werden, dass der Zugriffsschutz auf die Wertgegenstände erhöht wird, ohne Veränderungen an den Wertgegenständen infolge der zu treffenden Schutzmaßnahmen zuzulassen.

Erfindungsgemäß wird die Aufgabe dadurch gelöst, dass eine Reaktionsbaugruppe vorgesehen ist, mit der durch chemische Reaktion ein Festkörper gebildet wird, der den Raum zwischen dem Zugriffsschutz und den Wertgegenständen zumindest teilweise ausfüllt.

## Beschreibung

Die Erfindung betrifft eine Aufbewahrungs- und/oder Beförderungseinheit für Wertgegenstände, ein Fahrzeug zum Transport derselben, sowie ein Verfahren zur Erhöhung des Schutzes vor unberechtigtem Zugriff auf Wertgegenstände gemäß dem Oberbegriff der Ansprüche 1, 9 und 10.

Als Zugriffsschutzeinrichtungen für Geld- und Werttransporte sind mechanische Zusatzsicherungen großer Masse bekannt, die jedoch einen wesentlichen Teil der verfügbaren Nutzlast beanspruchen.

Weiterhin gehören aufwendige Shreddereinrichtungen zum Stand der Technik, mit denen Wertgegenstände vor einem Zugriff durch Unberechtigte zerstört werden können.

Auch sind Einfärbeverfahren zur farblichen Kennzeichnung von kleineren Mengen an Geldscheinen bekannt geworden, die zu einer an sich ungewollten Veränderung an diesen Wertgegenständen führen. Für Münzgeld und eine Vielzahl anderer Wertgegenstände ist dieses Verfahren nicht anwendbar.

Der Erfindung liegt die Aufgabe zugrunde, den Zugriffsschutz auf Wertgegenstände zu erhöhen, ohne Veränderungen an den Wertgegenständen infolge der zu treffenden Schutzmaßnahmen zuzulassen.

Erfindungsgemäß wird die Aufgabe dadurch gelöst, dass eine Reaktionsbaugruppe vorgesehen ist, mit der durch chemische Reaktion ein Festkörper gebildet wird, der den Raum zwischen dem Zugriffsschutz und den Wertgegenständen zumindest teilweise ausfüllt.

Die Erfindung ist mit dem Vorteil verbunden, dass der die Wertgegenstände umschließende Festkörper einen Zugriff auf die Wertgegenstände erschwert oder verhindert ohne den Wert dieser Gegenstände durch Veränderung jeglicher Art an diesen zu beeinträchtigen. Damit ist ein mechanischer Schutz bei gleichzeitiger Sichteinschränkung auf die Wertgegenstände gegeben.

In bevorzugter Ausgestaltung der Erfindung handelt es sich bei dem Festkörper um einen aus Reaktionskomponenten gebildeten, aushärtenden Schaumkörper, der aus einem Expansionskleber bestehen kann.

Die Reaktionsbaugruppe umfasst bevorzugt mehrere Speicher für Reaktionskomponenten, nachgeschaltete Dosier- und Transporteinrichtungen und einen Mischkopf, in dem die Reaktionskomponenten zur Einleitung der chemischen Reaktion gemischt werden.

Gemäß einer bevorzugten Ausführung der Erfindung befinden sich die Wertgegenstände in Transportbehältern. Dabei können die Transportbehälter in einem Transportgestell angeordnet sein, das mindestens einen Mischkopf einer Reaktionsbaugruppe trägt.

Weisen die Transportbehälter und/oder das Transportgestell eine Profilierung, Ausnehmungen oder Durchbrüche auf, kann der sich bildende Festkörper in diese Strukturen eindringen, was nach Aushärten des Festkörpers zu einer formschlüssige Verbindung mit dem Transportbehälter und/oder Transportgestell führt. Damit entsteht eine zusätzliche Erschwernis bei einem versuchten Zugriff auf die Wertgegenstände durch Nichtberechtigte.

Die Transportbehälter und/oder das Transportgestell können auf einem Fahrzeug angeordnet und zweckmäßig über eine Tür oder Klappe zugänglich sein.

Weiterhin ist Gegenstand der Erfindung ein Fahrzeug zum Transport von Wertgegenständen, das eine Aufbewahrungs- und/oder Beförderungseinheit zum Schutz der Wertgegenstände vor unberechtigtem Zugriff aufweist.

Weiterhin besteht die Erfindung in einem Verfahren zur Erhöhung des Schutzes vor unberechtigtem Zugriff auf Wertgegenstände, bei dem sich die Wertgegenstände hinter einem, diese nicht unmittelbar umgebenden Zugriffsschutz befinden. Hierbei wird der Raum zwischen dem Zugriffsschutz und den Wertgegenständen bedarfsweise, insbesondere beim Versuch eines unberechtigten Zugriffes, durch einen, in diesem Raum durch chemische Reaktion gebildeten Festkörper zumindest teilweise ausgefüllt.

In zweckmäßiger Verfahrensdurchführung wird der Beginn der chemischen Reaktion von dem Ereignis eines versuchten, unberechtigten Zugriffs ausgelöst, so dass eine wirksame Bildung des Festkörpers an den Wertgegenständen oder deren Transportbehältern vor dem tatsächlichen Zugriff erfolgen kann.

Die Erfindung soll nachfolgend anhand eines Ausführungsbeispieles näher erläutert werden.

Es zeigen
- Fig. 1: einen Transportbehälter zur Aufnahme von Wertgegenständen,
- Fig. 2: ein Transportgestell zur Lagerung von Transportbehältern gemäß Fig. 1,
- Fig. 3: eine an einem Transportgestell angeordnete Einrichtung zur Bildung eines aufgeschäumten Festkörpers durch chemische Reaktion,
- Fig. 4: ein Fahrzeug, auf dem ein Transportgestell gemäß Fig. 2 mit einer Einrichtung gemäß Fig. 3 angeordnet ist und
- Fig. 5: eine schematische Darstellung der Ansteuerung der Einrichtung zur Bildung eines Festkörpers durch chemische Reaktion.

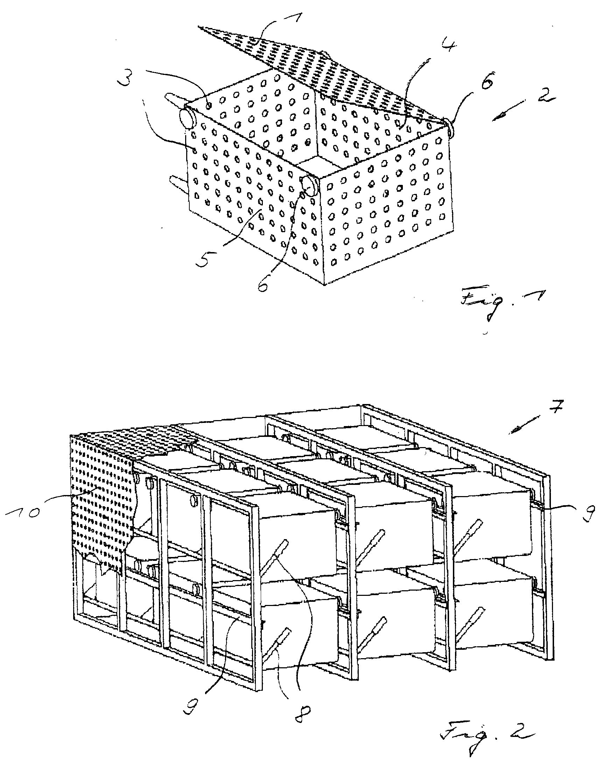

In Fig. 1 ist ein mit schwenkbarem Deckel 1 versehener Transportbehälter 2 für Wertgegenstände dargestellt, der Durchbrechungen 3 und im oberen Bereich der Seitenwände 4, 5 angeordnete Rollen 6 aufweist.

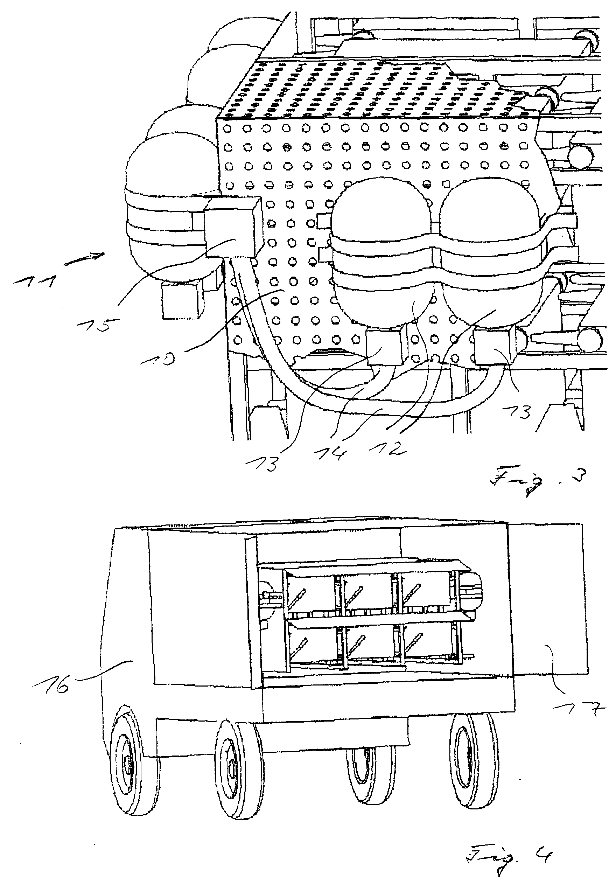

Mehrere Transportbehälter 2 sind gemäß Fig. 2 in einem Transportgestell 7 gelagert und durch Verriegelungshebel 8 in der jeweiligen Position gesichert. Die Lagerung der Transportbehälter 2 erfolgt dabei auf Führungsschiene 9, auf denen sich die Rollen 6 der Transportbehälter 2 abstützen.

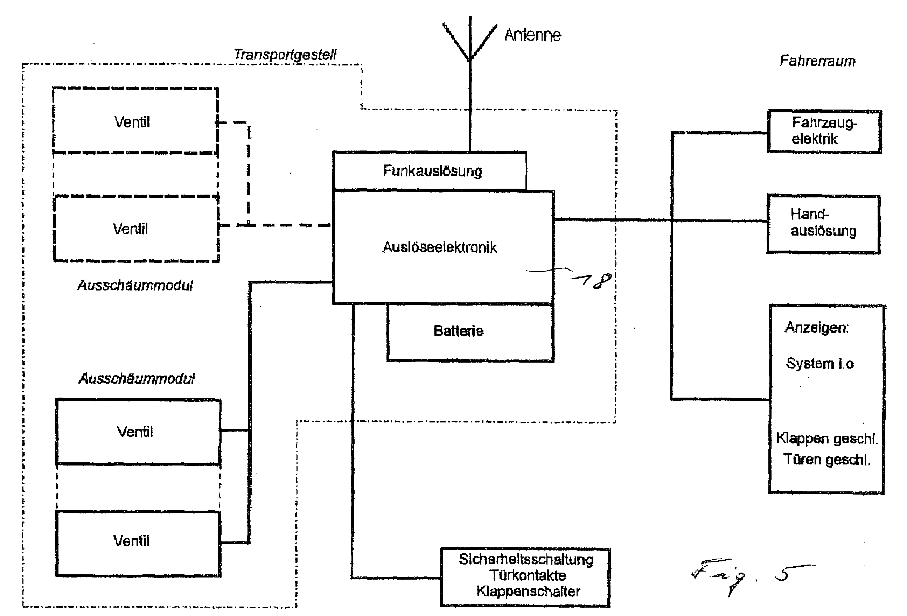

Am Transportgestell 7 sind seitlich Lochbleche 10 angeordnet, die Ausschäummodule 11 tragen. Die Ausschäummodule 11 bestehen jeweils aus zwei druckbeaufschlagten Fluidspeichern 12, diesen nachgeordneten Ventilen 13, Schlauchleitungen 14 und einem Mischkopf 15 (Fig. 3).

Das Transportgestell 7 mit Transportbehältern 2 und Ausschäummodulen 11 ist, wie aus Fig. 4 erkennbar, auf einem gepanzerten Fahrzeug 16 angeordnet und mit diesem verbunden.

Durch Schließen und Sichern der gepanzerten Hecktüren 17 des Fahrzeuges 16 werden die Transportbehälter 2 und damit die Wertgegenstände vor unberechtigtem Zugriff geschützt.

Ist zu vermuten, dass dieser Zugriffsschutz von Unberechtigten aufgehoben wird, besteht erfindungsgemäß die Möglichkeit, eine Auslöseelektronik 18, wie in Fig. 5 veranschaulicht, zu aktivieren, die die Sperrwirkung der Ventile 13 aufhebt, so dass die Reaktionskomponenten über die Schlauchleitungen 14 in den Mischkopf 15 gelangen. Im Ergebnis der im Mischkopf 15 stattfinden Durchmischung der Reaktionskomponenten und der daraufhin einsetzenden chemischen Reaktion entsteht ein 2-Komponenten-Schaum, der als Festkörper den Zwischenraum zwischen dem Transportgestell 7 und den Aussenwänden des Fahrzeugaufbaus zumindest teilweise ausfüllt.

Damit wird ein zusätzlicher Schutz gegen unberechtigten Zugriff auf die die Wertgegenstände enthaltenden Transportbehälter 2 geschaffen.

Die Anzahl der verwendeten Ausschäummodule 11, die Anordnung der Mischköpfe 15 am Transportgestell 7 und die Masse der Reaktionskomponenten in den Fluidspeichern 12 eines Ausschäummodules 11 wird von dem auszuschäumenden Volumen bestimmt. Um dieses konstant zu halten, befinden sich zweckmäßiger Weise im Transportgestell 7 immer die gleiche Anzahl von Transportbehältern 2, unabhängig davon, ob sich in jedem der Transportbehälter 2 Wertgegenstände befinden.

Weiter liegt es im Rahmen der Erfindung nur den Bereich eines möglichen unberechtigten Zugriffes, also beispielsweise den Bereich zwischen Hecktür 17 des Fahrzeuges 16 und dem Transportgestell 7 auszuschäumen.

Auch bietet sich die Möglichkeit, die Reaktion der Schaumbildung an das Ereignis des unberechtigten Zugriffes zu koppeln, so z.B. an das unberechtigte Öffnen einer der Hecktüren 17 des Fahrzeuges 16.

Mit der Erfindung ist die Möglichkeit gegeben, einen zusätzlichen Schutz von Wertgegenständen bedarfsweise, insbesondere bei versuchtem Zugriff durch Nichtberechtigte, zu schaffen, so dass ein tatsächlicher Zugriff verhindert oder zumindest zeitlich verzögert wird.

## Patentansprüche

1. Aufbewahrungs- und/oder Beförderungseinheit für Wertgegenstände, mit einem, die Wertgegenstände nach aussen abgrenzenden Zugriffsschutz, dadurch gekennzeichnet, dass eine Reaktionsbaugruppe (11) vorgesehen ist, mit der durch chemische Reaktion ein Festkörper gebildet wird, der den Raum zwischen dem Zugriffsschutz und den Wertgegenständen zumindest teilweise ausfüllt.

2. Aufbewahrungs- und/oder Beförderungseinheit nach Anspruch 1, dadurch gekennzeichnet, dass es sich bei dem Festkörper um einen aus Reaktionskomponenten gebildeten, aushärtenden Schaumkörper handelt.

3. Aufbewahrungs- und/oder Beförderungseinheit nach Anspruch 2, dadurch gekennzeichnet, dass der Schaumkörper aus einem Expansionskleber besteht.

4. Aufbewahrungs- und/oder Beförderungseinheit nach Anspruch 1, dadurch gekennzeichnet, dass die Reaktionsbaugruppe (11) aus mehreren Speichern (12) für Reaktionskomponenten, nachgeschalteten Dosier- (13) und Transporteinrichtungen (14) und einem Mischkopf (15) gebildet ist, in dem die Reaktionskomponenten zur Einleitung der chemischen Reaktion gemischt werden.

5. Aufbewahrungs- und/oder Beförderungseinheit nach Anspruch 1, dadurch gekennzeichnet, dass sich die Wertgegenstände in Transportbehältern (2) befinden.

6. Aufbewahrungs- und/oder Beförderungseinheit nach Anspruch 5, dadurch gekennzeichnet, dass die Transportbehälter (2) in einem Transportgestell (7) angeordnet sind, das mindestens einen Mischkopf (15) einer Reaktionsbaugruppe (11) trägt.

7. Aufbewahrungs- und/oder Beförderungseinheit nach Anspruch 6, dadurch gekennzeichnet, dass die Transportbehälter (2) und/oder das Transportgestell (7) eine Profilierung, Ausnehmungen oder Durchbrüche zur formschlüssigen Verbindung mit dem sich bildenden Festkörper aufweisen.

8. Aufbewahrungs- und/oder Beförderungseinheit nach Anspruch 7, dadurch gekennzeichnet, dass Transportbehälter (2) und/oder Transportgestell (7) auf einem Fahrzeug (16) angeordnet und über eine Tür (17) oder Klappe zugänglich sind.

9. Fahrzeug zum Transport von Wertgegenständen, dadurch gekennzeichnet, dass es eine Aufbewahrungs- und/oder Beförderungseinheit zum Schutz der Wertgegenstände vor unberechtigtem Zugriff gemäß einem oder mehreren der Ansprüche 1 bis 8 trägt.

10. Verfahren zur Erhöhung des Schutzes vor unberechtigtem Zugriff auf Wertgegenstände, bei dem sich die Wertgegenstände hinter einem, diese nicht unmittelbar umgebenden Zugriffsschutz befinden, dadurch gekennzeichnet, dass der Raum zwischen dem Zugriffsschutz und den Wertgegenständen bedarfsweise, insbesondere beim Versuch eines unberechtigten Zugriffes, durch einen, in diesem Raum durch chemische Reaktion gebildeten Festkörper zumindest teilweise ausgefüllt wird.

11. Verfahren nach Anspruch 10, dadurch gekennzeichnet, dass der Beginn der chemischen Reaktion von dem Ereignis eines versuchten, unberechtigten Zugriffs ausgelöst wird.
